# EUROPEAN PATENT SPECIFICATION

(11) **EP 2 465 022 B1**
(45) Date of publication and mention of the grant of the patent: **14.12.2016**
(21) Application number: 09737108.2
(22) Date of filing: 29.09.2009
(51) Int. Cl.: G06F 3/044

(54) **CAPACITIVE TOUCH PANELS**
KAPAZITIVE BERÜHRUNGSBILDSCHIRME
PANNEAUX TACTILES CAPACITIFS

(30) Priority: 11.08.2009 GB 0914076
(43) Date of publication of application: 20.06.2012
(73) Proprietor: M-Solv Limited, Oxford OX5 1FP (GB)
(72) Inventor: RUMSBY, Philip, Thomas, Oxon OX20 1SB (GB)
(74) Representative: Unwin, Stephen Geoffrey
(86) International application number: PCT/GB2009/002294
(87) International publication number: WO 2011/018594

(56) References cited:
- US-A1- 2003 234 770
- US-A1- 2008 264 699
- US-A1- 2008 277 259
- US-A1- 2009 160 824

## Description

The present invention relates to improvements in capacitive touch panels, in particular, the invention relates to transparent bridge interconnect structures for use in capacitive touch panels and a method for providing such interconnect structures.

Capacitive touch panel technology is in wide use, for example in mobile phones, satellite navigation systems, PDA screens and handheld games consoles.

One particular form of capacitive touch panel is known as projective capacitive touch technology or "PCT". In PCT devices, an XY array of sensing electrodes is formed in layers of transparent conducting material. In use, capacitance forms between the user's fingers and the projected capacitance from the sensing electrodes. A touch is made, precisely measured and translated into a command which is executed by underlying electronic devices for an appropriate software application. PCT screens enjoy the benefits of responding accurately to both fingers and styli.

One particular form of PCT technology uses a single layer of transparent conducting material and it is the changes in the self-capacitance between separate areas in this layer that are detected. A convenient way to make such a single layer PCT device is to divide up the conducting layer into electrically separated areas that are then interconnected to form sets of orthogonal electrodes. Since the interconnections have to be conducting it is usual to form these with structures based on fine lines of metallic material. Whilst they do not obstruct viewing of the images, present metallic material based interconnect technologies reflect light and so are visible on close inspection of the screen and so the image quality as viewed by the user is impaired.

In addition use of metallic material for these interconnects generally requires a complex multi stage manufacturing process involving metal deposition, resist coating, masking, exposing, resist developing, etching and resist stripping. Such processes use many chemicals and consume much energy and hence are costly.

US 2003/0234770 A1, US2008/0277259 A1, US2008/0264699 A1 and US2009/0160824 A1 all describe methods of manufacturing capacitive touch panels.

The present invention seeks to provide an alternative construction for a PCT panel which provides for improved image viewing and other advantages over the prior art

In accordance with claim 1, the present invention provides a method for providing a transparent bridge interconnect structure in a capacitive touch panel comprising;
onto a transparent conducting layer deposited on a transparent substrate and divided into a plurality of discrete electrode cells which are electrically connected in a first direction but electrically isolated in a second direction;
1. depositing a pattern of transparent insulating material, the pattern configured to bridge adjacent electrically isolated electrode cells, and
2. depositing a pattern of transparent conducting material configured to overlay and intersect with the deposited pattern of transparent insulating material thereby to provide an electrical connection between the electrically isolated cells,
whereby to provide two conduction paths across the transparent conducting layer.

Typically, the two directions are orthogonal to one another.

Conveniently, step 1 and/or 2 is achieved using an inkjet printing technique.

Optionally, either or both of the deposits in steps 1 and 2 may comprise a series of uniformly spaced continuous lines.

In accordance with claim 6, the invention provides a capacitive touch panel comprising;
a transparent substrate, a layer of transparent conducting material deposited onto a surface of the transparent substrate, the layer of transparent conducting material being divided to form a plurality of discrete electrode cells which are electrically connected in a first direction but electrically isolated in a second direction, a deposited pattern of transparent insulating material on the transparent conducting layer, the pattern configured to bridge adjacent electrically isolated cells, and a deposited pattern of transparent conducting material overlaying and intersecting with the deposited pattern of transparent insulating material thereby providing an electrical connection between adjacent electrically isolated cells and thereby providing two conduction paths across the transparent conducting layer.

Typically, the two directions are orthogonal to one another.

The electrode cells are each similarly shaped and sized and arranged in interleaved columns, though are not restricted to one shape. For example but without limitation, the cells may be square, diamond, lozenge or tear drop shaped.

The electrode cells may conveniently be defined using laser scribing techniques. Scribed lines may be sharp angled or curved to produce differently shaped electrode cells.

The base transparent electrically conducting layer may, for example, comprise indium tin oxide. Other suitable transparent conducting oxides include, without limitation, Tin oxide (SnO2), doped Zinc oxide (ZnO), etc. This layer may also be of organic conducting material. Examples of organic materials (without limitation) are PEDOT (polyethylenedioxythiophene), polyanilene or polythiophene. Such polymers are selected to achieve coatings with the required optical transmittance (desirably 90% in range 400-800nm) and surface resistance of typically less than 100 or 200Ω per square. Soluble conducting polymers based on polyanilines, polythiophenes, polypyrroles or polyisothianaphthenes meet these requirements. These same inorganic and organic conducting materials can also be used for the conducting material applied by ink jet techniques. The transparent insulating material applied by ink jet techniques may also be of organic or inorganic type. Examples of inorganic insulating materials include (without limitation) silicon dioxide, glass and silicon nitride. Examples of organic insulating materials include (without limitation) PVP (polyvinylphenol), PVP PMMA (polyvinylphenol-co-methyl-methacrylate), PMMA (polymethyl methacrylate) and PVDF (polyvinylidene fluoride). Such polymers are selected to achieve a required transmittance of 90% in range 400-800nm and surface resistance exceeding about 1 GΩ per square.

Optionally, either or both of the deposits of electrically conductive and electrically insulating material comprise a series of uniformly spaced continuous lines.

The transparent substrate may be organic (plastic) or inorganic (glass).

In accordance with claim 13, the invention provides an apparatus for providing a transparent bridge interconnect structure in a capacitive touch panel in accordance with the methods as hereinabove described, the apparatus comprising; a laser, an ink jet printing head, means for holding a transparent conducting layer deposited on a transparent substrate, means for adjusting the relative positions of the laser and ink jet print head to the transparent conducting layer and a controller to control the laser and ink jet print head whereby in a first step to divide, by means of a laser cutting technique, the transparent conducting layer to form a plurality of discrete electrode cells which are electrically connected in a first direction but electrically isolated in a second direction and in a second step to deposit, by means of an inkjet printing process, a pattern of transparent insulating material, the pattern configured to bridge adjacent electrically isolated electrode cells.

Optionally, the controller is further configured in a third step to deposit, by means of an inkjet printing process, a pattern of transparent conducting material configured to overlay and intersect with the deposited pattern of transparent insulating material thereby to provide an electrical connection between the electrically isolated cells.

In order to better explain the invention, examples of the known prior art and the applicant's invention will now be further described with reference to the accompanying drawings in which;
Figure 1 shows a prior art single layer capacitive touch panel in a first step of its construction;
Figure 2 shows the prior art panel of Figure 1 in a second step of its construction;
Figure 3 shows a top view of one of the conductive bridge devices of a prior art capacitive touch panel resulting from the first and second processes illustrated in Figures 1 and 2;
Figure 4 shows a side view of the structure of Figure 3;
Figure 5 shows constructions of a transparent bridge interconnecting structure in a capacitive touch screen device in accordance with the present invention;
Figure 6 shows a side view of the bridge structure of Figure 5;
Figures 7 and 8 show some alternative geometries for the novel bridge structure illustrated in Figures 5 and 6.

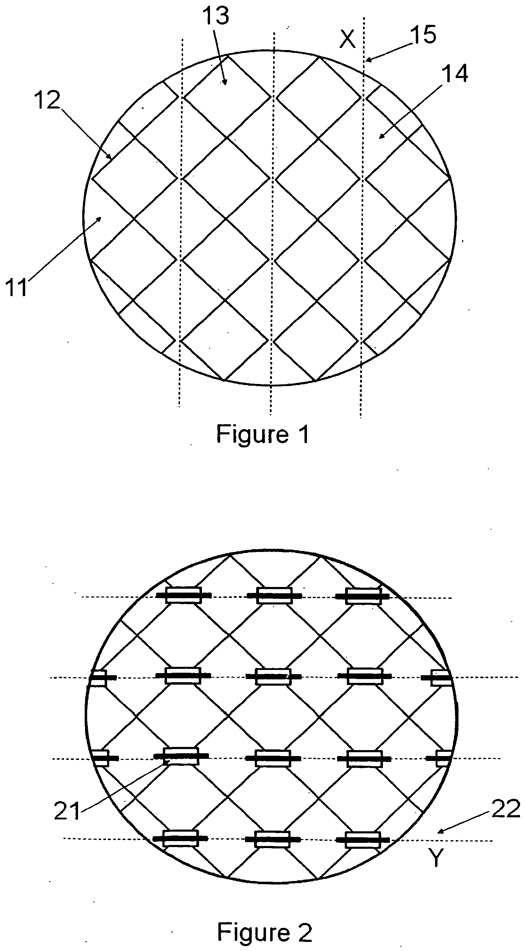

Figure 1 (Prior Art) shows a section of a typical electrode pattern for a single layer capacitive touch panel in its first stage of manufacture. A thin layer 11 of transparent conducting material is deposited uniformly on top of a transparent substrate. A lithographic process is then generally used to remove lines of material 12 to divide up the conducting layer and to form columns of electrically isolated squares 13 and columns of electrically connected squares 14. The connected squares 14 of conducting material 11 give rise to columns of continuously conducting electrodes 15 parallel to a first (X) direction along the full length of the touch panel. Lasers are also used to pattern the conducting layer.

Figure 2 (Prior Art) shows how the electrically isolated squares 13 are joined by means of conducting metallic bridge structures 21 to form continuously conducting rows of electrodes 22 in a second (Y) direction.

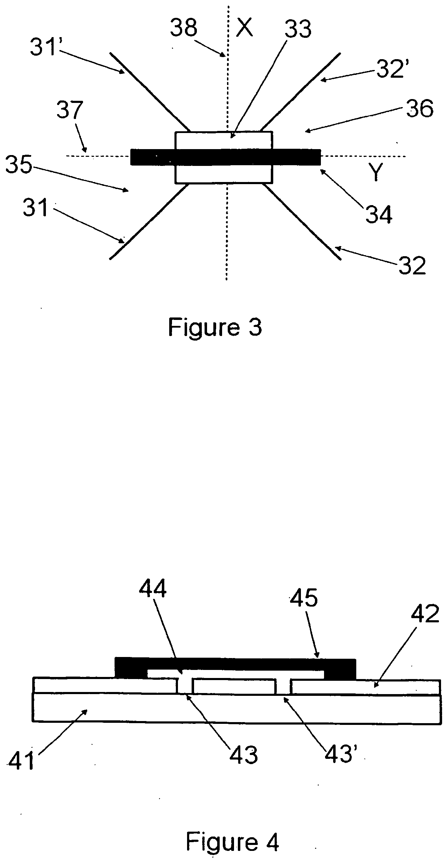

Figure 3 (Prior Art) shows a detailed top view of one of the conducting bridge structures 21. Lines 31, 31' and 32, 32' are in the conducting layer and separate it electrically as shown in Figure 1. A patch of insulating material 33 has on top of it a line of conducting metallic material 34 which bridges across from isolated square 35 to isolated square 36. Such insulating patches 33 and conducting lines are generally formed by lithographic processes. By repeating this two layer bridge device at all equivalent points on the touch panel, rows 37 of conducting electrodes are formed in the Y direction intersecting with the columns of conducting electrodes 38 in the X direction.

Figure 4 (Prior Art) shows a side view of a bridge structure as illustrated in Figure 3. A transparent substrate of plastic or glass 41 has deposited on it a thin layer of transparent conducting material 42. This is typically an inorganic material such as ITO (Indium Tin Oxide). 43 and 43' are lines formed in the conducting layer 42 by lithography or lasers which serve to separate it into the structure show in Figure 1. A patch of insulating material 44 extends across both cuts in the conducting layer 42. This material may be organic or inorganic. A line of metallic conducting material 45 forms the conducting path from one side of the cuts to the other. This line 45 is generally made by lithography as it has to be very fine so that it cannot be seen.

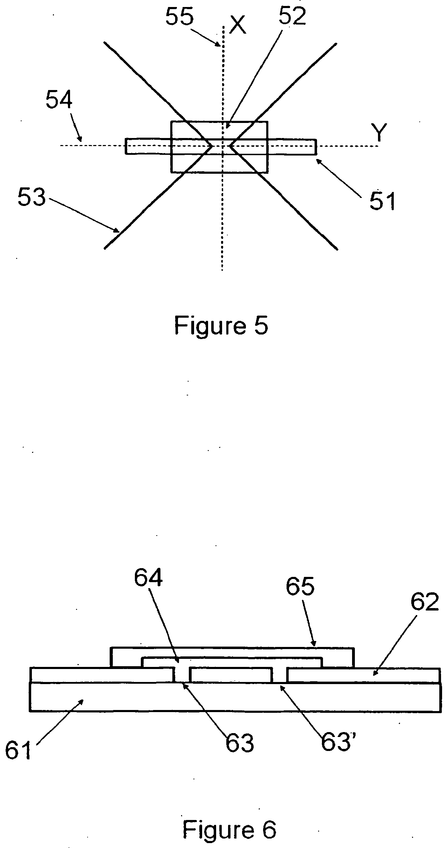

Figure 5 shows a first embodiment of the novel construction of the present invention. A transparent conducting line of material 51 replaces the opaque metal line 45 described in relation to the prior art device of Figure 4. The transparent conducting material 51 is deposited by ink jet printing techniques and because it is transparent does not have to be narrow to remain unseen. The line of transparent conducting material 51 is applied over a patch of insulating material 52 which is also transparent and is also applied by ink jet methods. The cuts 53 in the lower conducting layer are made by laser scribing. The whole bridge device allows a conduction path in the Y direction 54 by means of going "over" the bridge and a path in the X direction 55 by going "under" the bridge.

Figure 6 shows a side view of a transparent bridge structure of Figure 5. A transparent substrate of plastic or glass 61 has a thin layer of transparent conducting material 62 deposited onto it. This is for example an inorganic material such as ITO (Indium Tin Oxide). 63 and 63' are the lines formed in the conducting layer by lasers to separate it into the structure already shown in Figure 1. A patch of transparent insulating material 64 extends across both cuts in the conducting layer 62. This material may be organic or inorganic and is applied by ink jet printing methods. A line of transparent conducting material 65 forms the conducting path from one side of the cuts to the other. This material is applied by ink jet methods and as it is transparent it does not need to be very fine so that it cannot be seen. The whole bridge device allows 2 orthogonal conduction paths in one case by going "over" the bridge and in another case by going "under" the bridge.

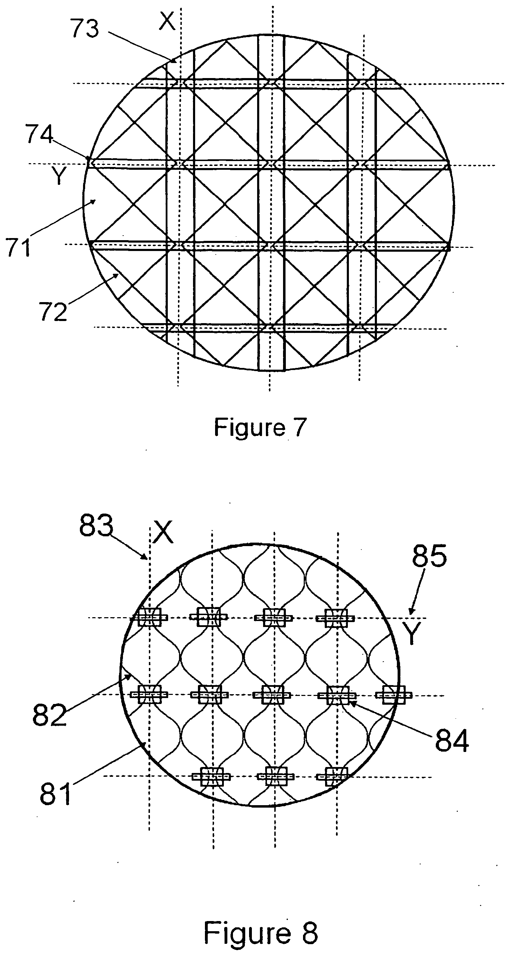

Figure 7 shows alternative bridge geometries applying similar construction principles to those shown in Figures 5 and 6. The areas of insulating and conducting transparent material at each bridge do not have to be localized patches as previously described. As the materials are transparent there is no need to make them small and they can be made bigger and even extended to form continuous bands. Figure 7 shows a continuous transparent conducting layer 71 divided up into columns of electrically connected and electrically isolated squares by means of laser scribe lines 72. In this case however the discrete areas of transparent insulating film at each bridge are now replaced by continuous bands 73 extending over the full length of the columns and discrete areas of transparent conducting film at each bridge are replaced by continuous bands 74 extending over the full length of the rows. Columns of transparent insulating material and rows of transparent conducting material can both be made up of continuous bands as shown. Alternatively either one can be made up of discrete patches and the other as continuous bands.

Figure 8 shows that electrode shapes do not have to square as shown in Figures 1 to 7. Figure 8 shows one alternative shape where the continuous conducting film 81 is laser scribed with a wave shape 82 to form columns of electrically connected lozenges shapes 83 in the X direction. Columns of electrically isolated lozenge shapes are also formed in the X direction. These are connected by adding ink jet printed transparent bridges 84 to form rows of conducting material 85 in the Y direction. Many other laser scribe trajectories are possible giving rise to many possible electrode shapes. For example, but without limitation, diamond and elongated lozenge shapes are envisaged.

## Claims

1. A method for providing a transparent bridge Interconnecting structure in a capacitive touch panel comprising a transparent substrate with a transparent conducting layer deposited thereon, comprising the steps:
i) dividing by means of a laser cutting technique, the transparent conducting layer into a plurality of discrete electrode cells which are electrically connected in a first direction but electrically isolated in a second direction;
ii) by means of an inkjet process, depositing a pattern of transparent Insulating material, the pattern being configured to bridge adjacent electrically isolated electrode cells, and
iii) by means of an inkjet process, depositing a pattern of transparent conducting material configured to overlay and intersect with the deposited pattern of transparent insulating material thereby to provide an electrical connection between the electrically isolated cells,
whereby to provide two conduction paths across the transparent conducting layer.

2. A method as claimed In claim 1 wherein the two conduction paths are orthogonal to one another.

3. A method as claimed in claim 1 or 2 wherein either or both of the deposits In steps I) and II) comprises a series of uniformly spaced continuous lines.

4. A method as claimed in any preceding claim wherein the transparent Insulating material is a soluble insulating polymer selected from; PVP (polyvinylphenol), PVP PMMA (polyvinylphenol-co-methyl-methacrylate), PMMA (polymethyl methacrylate) and PVDF (polyvinylidene fluoride),

5. A method as claimed in any preceding claim wherein the transparent conducting material is a soluble conducting polymer selected from; PEDOT (polyethylenedloxythiophene), polyanflene, polythiophene or Is based on a polyaniline, a polythiophene, a polypyrrole or a polyisothianaphthene.

6. A capacitive touch panel comprising;
a transparent substrate, a layer of transparent conducting material deposited onto a surface of the transparent substrate, the layer of transparent conducting material being divided by laser scribed lines into a plurality of discrete electrode cells which are electrically connected in a first direction but electrically isolated in a second direction, an Ink-jet printed pattern of transparent insulating material on the transparent conducting layer, the pattern configured to bridge adjacent electrically isolated cells, and an ink-jet printed pattern of transparent conducting material overlaying and intersecting with the deposited pattern of transparent insulating material thereby providing an electrical connection between adjacent electrically isolated cells and thereby providing two conduction paths across the transparent conducting layer.

7. A capacitive touch panel as claimed in claim 6 wherein the first and second directions are orthogonal with one another and the two conduction paths are orthogonal with one another.

8. A capacitive touch panel as claimed in claim 6 or 7 wherein the electrode cells are each similarly shaped and sized and arranged in interleaved columns and the shape of the cells is selected from square, diamond, lozenge or tear drop shaped.

9. A capacitive touch panel as claimed in any of claims 6 to 8 wherein the transparent electrically conducting layer and/or the deposit of transparent electrically conducting material comprise indium tin oxide.

10. A capacitive touch panel as claimed in any of claims 6 to 9 wherein either or both of the deposits of electrically conductive and electrically insulating material comprise a series of uniformly spaced continuous lines.

11. A capacitive touch panel as claimed in any of claims 6 to 10 wherein the deposit of transparent electrically conducting material is a soluble conducting polymer selected from; PEDOT (polyethylenedioxythiophene), polyanilene, polythiophene or is based on a polyaniline, a polythiophene, a polypyrrole or a polyisothianaphthene.

12. A capacitive touch panel as claimed in any of claims 6 to 11 wherein the transparent insulating material is a soluble insulating polymer selected from; PVP (polyvinylphenol), PVP PMMA (polyvinylphenol-co-methyl-methacrylate), PMMA (polymethyl methacrylate) and PVDF (polyvinylidene fluoride).

13. An apparatus arranged to provide a transparent bridge interconnect structure in a capacitive touch panel by performing a method according to any of claims 1 to 5, the apparatus comprising; a laser, an ink jet printing head, means for holding a transparent substrate with a transparent conducting layer deposited thereon, means arranged to adjust the positions of the laser and ink jet print head relative to the transparent conducting layer and a controller arranged to control the laser and Ink jet print head to :
i) divide, by means of a laser cutting technique, the transparent conducting layer into a plurality of discrete electrode cells which are electrically connected in a First direction but electrically isolated in a second direction,
ii) deposit, by means of an inkjet printing process, a pattern of transparent insulating material, the pattern configured to bridge adjacent electrically isolated electrode cells, and
iii) deposit, by means of an inkjet printing process, a pattern of transparent conducting material configured to overlay and intersect with the deposited pattern of transparent insulating material thereby to provide an electrical connection between the electrically isolated cells.

## Patentansprüche

1. Verfahren für das Bereitstellen einer transparenten Brückenverbindungsstruktur in einem kapazitiven Berührungsfeld, umfassend ein transparentes Substrat mit einer darauf abgelagerten transparenten leitfähigen Schicht, umfassend die folgenden Schritte:
i) Aufteilen mithilfe eines Laserschneideverfahrens der transparenten leitfähigen Schicht in eine Mehrzahl separater Elektrodenzellen, die in einer ersten Richtung elektrisch verbunden sind, aber in einer zweiten Richtung elektrisch isoliert sind;
ii) mithilfe eines Tintenstrahlverfahrens Ablagern eines Musters aus transparentem Isoliermaterial, wobei das Muster konfiguriert ist, nebeneinanderliegende elektrisch isolierte Elektrodenzellen zu überbrücken, und
iii) mithilfe eines Tintenstrahlverfahrens Ablagern eines Musters aus transparentem leitfähigem Material, das konfiguriert ist, das abgelagerte Muster aus transparentem Isoliermaterial zu überlagern und es zu überkreuzen, wodurch eine elektrische Verbindung zwischen den elektrisch isolierten Zellen bereitgestellt wird,
wodurch zwei Leitungswege über die transparente leitfähige Schicht bereitgestellt werden.

2. Verfahren nach Anspruch 1, wobei die Leitungswege orthogonal zueinander sind.

3. Verfahren nach Anspruch 1 oder 2, wobei eine oder beide der Ablagerungen in den Schritten I) und II) eine Reihe gleichmäßig beabstandeter durchgehender Linien umfassen.

4. Verfahren nach einem der vorstehenden Ansprüche, wobei das transparente Isoliermaterial ein lösliches Isolierpolymer ist, ausgewählt aus; PVP (Polyvinylphenol), PVP PMMA (Polyvinylphenol-co-methyl-methacrylat), PMMA (Polymethylmethacrylat) und PVDF (Polyvinylidenfluorid).

5. Verfahren nach einem der vorstehenden Ansprüche, wobei das transparente leitfähige Material ein lösliches leitfähiges Polymer ist, ausgewählt aus; PEDOT (Polyethylendioxythiopen), Polyanilen, Polythiopen oder auf einem Polyanilin, einem Polythiopen, einem Polypyrrol oder einem Polyisothianaphthen basiert.

6. Kapazitives Berührungsfeld, umfassend:
ein transparentes Substrat, eine Schicht auf einer Oberfläche des transparenten Substrats abgelagerten transparenten leitfähigen Materials, wobei die Schicht aus transparentem leitfähigem Material mittels von Lasern geschriebener Linien in eine Mehrzahl separater Elektrodenzellen aufgeteilt wird, die in einer ersten Richtung elektrisch verbunden sind, aber in einer zweiten Richtung elektrisch isoliert sind, ein tintenstrahlbedrucktes Muster aus transparentem Isoliermaterial auf der transparenten leitfähigen Schicht, wobei das Muster konfiguriert ist, nebeneinanderliegende elektrisch isolierte Zellen zu überbrücken, und ein tintenstrahlbedrucktes Muster aus transparentem leitfähigem Material, das das abgelagerte Muster aus transparentem Isoliermaterial überlagert und es überkreuzt, wodurch eine elektrische Verbindung zwischen nebeneinanderliegenden elektrisch isolierten Zellen bereitgestellt wird und wodurch zwei Leitungswege über die transparente leitfähige Schicht bereitgestellt werden.

7. Kapazitives Berührungsfeld nach Anspruch 6, wobei die ersten und zweiten Richtungen miteinander orthogonal sind und die zwei Leitungswege miteinander orthogonal sind.

8. Kapazitives Berührungsfeld nach Anspruch 6 oder 7, wobei die Elektrodenzellen jeweils eine ähnliche Form und Größe haben und in verzahnten Säulen angeordnet sind und die Form der Zellen ausgewählt ist aus Quadrat-, Diamant-, Rauten- oder Tränenform.

9. Kapazitives Berührungsfeld nach einem der Ansprüche 6 bis 8, wobei die transparente elektrisch leitfähige Schicht und/oder die Ablagerung aus transparentem elektrisch leitfähigem Material Indiumzinnoxid umfassen.

10. Kapazitives Berührungsfeld nach einem der Ansprüche 6 bis 9, wobei eine oder beide der Ablagerungen aus elektrisch leitfähigem Material und elektrischem Isoliermaterial eine Reihe gleichmäßig beabstandeter durchgehender Linien umfassen.

11. Kapazitives Berührungsfeld nach einem der Ansprüche 6 bis 10, wobei die Ablagerung aus transparentem elektrisch leitfähigem Material ein lösliches leitfähiges Polymer ist, ausgewählt aus; PEDOT (Polyethylendioxythiopen), Polyanilen, Polythiopen oder auf einem Polyanilin, einem Polythiopen, einem Polypyrrol oder einem Polyisothianaphthen basiert.

12. Kapazitives Berührungsfeld nach einem der Ansprüche 6 bis 11, wobei das transparente Isoliermaterial ein lösliches Isolierpolymer ist, ausgewählt aus; PVP (Polyvinylphenol), PVP PMMA (Polyvinylphenol-co-methyl-methacrylat), PMMA (Polymethylmethacrylat) und PVDF (Polyvinylidenfluorid).

13. Vorrichtung, angeordnet, durch das Ausführen eines Verfahrens nach einem der Ansprüche 1 bis 5 eine transparente Brückenverbindungsstruktur in einem kapazitiven Berührungsfeld bereitzustellen, die Vorrichtung umfassend; einen Laser, einen Tintenstrahldruckkopf, Mittel zum Halten eines transparenten Substrats mit einer darauf abgelagerten transparenten leitfähigen Schicht, Mittel, angeordnet zum Anpassen der Positionen des Lasers und des Tintenstrahldruckkopfs relativ zur transparenten leitfähigen Schicht und eine Steuerung, angeordnet zum Steuern des Lasers und des Tintenstrahldruckkopfs, um:
i) mithilfe eines Laserschneideverfahrens die transparente leitfähige Schicht in eine Mehrzahl separater Elektrodenzellen aufzuteilen, die in einer ersten Richtung elektrisch verbunden sind, aber in einer zweiten Richtung elektrisch isoliert sind;
ii) mithilfe eines Tintenstrahldruckverfahrens ein Muster aus transparentem Isoliermaterial abzulagern, wobei das Muster konfiguriert ist, nebeneinanderliegende elektrisch isolierte Elektrodenzellen zu überbrücken, und
iii) mithilfe eines Tintenstrahldruckverfahrens ein Muster aus transparentem leitfähigem Material abzulagern, das konfiguriert ist, das abgelagerte Muster aus transparentem Isoliermaterial zu überlagern und es zu überkreuzen, wodurch eine elektrische Verbindung zwischen den elektrisch isolierten Zellen bereitgestellt wird.

## Revendications

1. Procédé pour fournir une structure d'interconnexion en pont transparente dans un écran tactile capacitif comprenant un substrat transparent avec une couche conductrice transparente déposée sur celui-ci, comprenant les étapes :
i) la division, au moyen d'une technique de coupe au laser, de la couche conductrice transparente en une pluralité de cellules à électrode distinctes qui sont électriquement connectées dans une première direction mais électriquement isolées dans une seconde direction ;
ii) au moyen d'un processus à jet d'encre, le dépôt d'un motif de matériau isolant transparent, le motif étant configuré pour connecter en pont des cellules à électrode électriquement isolées adjacentes, et
iii) au moyen d'un processus à jet d'encre, le dépôt d'un motif de matériau conducteur transparent configuré pour recouvrir et intersecter le motif de matériau isolant transparent déposé pour ainsi fournir une connexion électrique entre les cellules électriquement isolées,
pour ainsi fournir deux trajets de conduction sur la couche conductrice transparente.

2. Procédé selon la revendication 1, dans lequel les deux trajets de conduction sont orthogonaux l'un à l'autre.

3. Procédé selon la revendication 1 ou 2, dans lequel l'un ou l'autre ou les deux des dépôts dans les étapes i) et ii) comprend une série de lignes continues uniformément espacées.

4. Procédé selon une quelconque revendication précédente, dans lequel le matériau isolant transparent est un polymère isolant soluble sélectionné parmi : PVP (polyvinylphénol), PVP PMMA (polyvinylphénol-co-méthyl-méthacrylate), PMMA (méthacrylate de polyméthyle) et PVDF (fluorure de polyvinylidène).

5. Procédé selon une quelconque revendication précédente, dans lequel le matériau conducteur transparent est un polymère conducteur soluble sélectionné parmi : PEDOT (polyéthylènedioxythiophène), polyanilène, polythiophène ou est à base d'une polyaniline, d'un polythiophène, d'un polypyrrole ou d'un polyisothianaphtène.

6. Ecran tactile capacitif, comprenant :
un substrat transparent, une couche de matériau conducteur transparent déposée sur une surface du substrat transparent, la couche de matériau conducteur transparent étant divisée par des lignes découpées au laser en une pluralité de cellules à électrode distinctes qui sont électriquement connectées dans une première direction mais électriquement isolées dans une seconde direction, un motif imprimé par jet d'encre de matériau isolant transparent sur la couche conductrice transparente, le motif étant configuré pour connecter en pont des cellules électriquement isolées adjacentes, et un motif imprimé par jet d'encre de matériau conducteur transparent recouvrant et intersectant le motif de matériau isolant transparent déposé, ainsi fournissant une connexion électrique entre des cellules électriquement isolées adjacentes et ainsi fournissant deux trajets de conduction sur la couche conductrice transparente.

7. Ecran tactile capacitif selon la revendication 6, dans lequel les première et seconde directions sont orthogonales l'une à l'autre et les deux trajets de conduction sont orthogonaux l'un à l'autre.

8. Ecran tactile capacitif selon la revendication 6 ou 7, dans lequel les cellules à électrode sont chacune formées et dimensionnées de façon similaire et agencées en colonnes entrelacées et la forme des cellules est sélectionnée parmi une forme carrée, de diamant, de losange ou de goutte d'eau.

9. Ecran tactile capacitif selon l'une quelconque des revendications 6 à 8, dans lequel la couche électriquement conductrice transparente et/ou le dépôt de matériau électriquement conducteur transparent comprennent de l'oxyde d'indium-étain.

10. Ecran tactile capacitif selon l'une quelconque des revendications 6 à 9, dans lequel l'un ou l'autre ou les deux des dépôts de matériau électriquement conducteur et électriquement isolant comprennent une série de lignes continues uniformément espacées.

11. Ecran tactile capacitif selon l'une quelconque des revendications 6 à 10, dans lequel le dépôt de matériau électriquement conducteur transparent est un polymère conducteur soluble sélectionné parmi : PEDOT (polyéthylènedioxythiophène), polyanilène, polythiophène ou est à base d'une polyaniline, d'un polythiophène, d'un polypyrrole ou d'un polyisothianaphtène.

12. Ecran tactile capacitif selon l'une quelconque des revendications 6 à 11, dans lequel le matériau isolant transparent est un polymère isolant soluble sélectionné parmi : PVP (polyvinylphénol), PVP PMMA (polyvinylphénol-co-méthyl-méthacrylate), PMMA (méthacrylate de polyméthyle) et PVDF (fluorure de polyvinylidène).

13. Appareil agencé pour fournir une structure d'interconnexion en pont transparente dans un écran tactile capacitif en réalisant un procédé selon l'une quelconque des revendications 1 à 5, l'appareil comprenant : un laser, une tête d'impression à jet d'encre, des moyens pour retenir un substrat transparent avec une couche conductrice transparente déposée sur celui-ci, des moyens agencés pour ajuster les positions du laser et de la tête d'impression à jet d'encre par rapport à la couche conductrice transparente et un dispositif de commande agencé pour commander le laser et la tête d'impression à jet d'encre pour :
i) diviser, au moyen d'une technique de coupe au laser, la couche conductrice transparente en une pluralité de cellules à électrode distinctes qui sont électriquement connectées dans une première direction mais électriquement isolées dans une seconde direction,
ii) le dépôt, au moyen d'un processus d'impression à jet d'encre, d'un motif de matériau isolant transparent, le motif étant configuré pour connecter en pont des cellules à électrode électriquement isolées adjacentes, et
iii) le dépôt, au moyen d'un processus d'impression à jet d'encre, d'un motif de matériau conducteur transparent configuré pour recouvrir et intersecter le motif de matériau isolant transparent déposé pour ainsi fournir une connexion électrique entre les cellules électriquement isolées.
